(19) Europäisches Patentamt
European Patent Office
Office européen des brevets

(11) EP 2 367 229 A1

(12) **EUROPEAN PATENT APPLICATION**

(43) Date of publication:
**21.09.2011 Bulletin 2011/38**

(21) Application number: **11156591.7**

(22) Date of filing: **02.03.2011**

(51) Int Cl.:
***H01M 10/0567*** *(2010.01)* ***H01M 10/0569*** *(2010.01)*
***H01M 10/052*** *(2010.01)* ***H01M 4/505*** *(2010.01)*
***H01M 4/525*** *(2010.01)* *H01M 4/36* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.03.2010 JP 2010054989**

(71) Applicant: **Sanyo Electric Co., Ltd.**
**Osaka 570-8677 (JP)**

(72) Inventors:
- **Andou, Kazushi**
  **Moriguchi-shi, Osaka (JP)**
- **Abe, Koji**
  **Tokyo (JP)**
- **Miyoshi, Kazuhiro**
  **Ube-shi, Yamaguchi (JP)**
- **Kondo, Masahide**
  **Ube-shi Yamaguchi (JP)**

(74) Representative: **Glawe, Delfs, Moll**
**Patent- und Rechtsanwälte**
**Postfach 26 01 62**
**80058 München (DE)**

(54) **Non-aqueous electrolyte secondary battery**

(57) In the nonaqueous electrolyte secondary battery, the positive electrode active material is composed of a mixture of a lithium-cobalt composite oxide containing at least both zirconium and magnesium, and a lithium-manganese-nickel composite oxide containing at least both manganese and nickel. The nonaqueous electrolyte includes fluoroethylene carbonate and dimethyl carbonate as a nonaqueous solvent and further includes an additive expressed by General Formula (1), which having a capability to form an SEI surface film, and a higher oxidation resistance than that of VC. Thus, the negative electrode active material is unlikely to react with the organic solvent. Therefore, decomposition of the organic solvent is suppressed. Thus the battery having a long cycling life even when it is charged at a positive electrode charging potential of 4.4 to 4.6 V based on lithium and having a high residual capacity after storage at high temperature in a charged state is provided.

EP 2 367 229 A1

## Description

TECHNICAL FIELD

The present invention relates to a nonaqueous electrolyte secondary battery capable of being charged at high charging voltage. More particularly, the present invention relates to a nonaqueous electrolyte secondary battery having a long cycling life even when it is charged at a positive electrode charging potential of 4.4 to 4.6 V based on lithium and further having a high residual capacity after storage at high temperature in a charged state.

BACKGROUND ART

Recently, as power supplies for driving portable electronic equipment, such as cell phones, portable personal computers, and portable music players, and further, as power supplies for hybrid electric vehicles (HEVs) and electric vehicles (EVs), nonaqueous secondary batteries represented by lithium ion secondary batteries having a high energy density and high capacity are widely used.

For the positive electrode active material in these nonaqueous secondary batteries, use is made, either singly or mixed together, of lithium transition-metal composite oxides, which are expressed by $LiMO_2$ (where M is at least one of Co, Ni, and Mn) (namely, $LiCoO_2$, $LiNiO_2$, $LiNi_yCo_{1-y}O_2$ (y = 0.01 to 0.99), $LiMnO_2$, $LiMn_2O_4$, and $LiNi_xMn_yCo_zO_2$ (x + y + z = 1), or $LiFePO_4$ or the like, all of which can reversibly absorb and desorb lithium ions.

Among them, lithium-cobalt composite oxides and dissimilar metallic element-containing lithium-cobalt composite oxides are primarily used because their battery characteristics in various aspects are especially higher than those of other oxides. However, cobalt is expensive and exists in small amounts as a natural resource. Thus, in order to continue to use such lithium-cobalt composite oxides and dissimilar metallic element-containing lithium-cobalt composite oxides as the positive electrode active material of nonaqueous secondary batteries, it is desired to raise the performance of nonaqueous secondary batteries to even higher levels.

One of the methods for increasing the capacity of a nonaqueous electrolyte secondary battery using such lithium-cobalt composite oxide as the positive electrode active material is to increase the final charge voltage to about 4.4 to 4.6 V based on lithium. For example, a nonaqueous electrolyte secondary battery that employs a transition-metal oxide containing lithium such as $LiCoO_2$ mentioned above as the positive electrode active material and employs a carbon material such as graphite as the negative electrode active material commonly has a charging voltage of 4.1 to 4.2 V (a positive electrode potential of 4.2 to 4.3 V based on lithium). In such charging condition, the positive electrode used is only 50 to 60% with respect to the theoretical capacity. Therefore, when the nonaqueous electrolyte secondary battery has a higher charging voltage, 70% or more of the capacity of the positive electrode can be used with respect to the theoretical capacity, and thus the capacity can be efficiently increased within a limited volume.

Another method for increasing the capacity of a nonaqueous electrolyte secondary battery is to increase the packing density of the electrode material. Recent nonaqueous electrolyte secondary batteries with high capacity have been manufactured by combining such methods of increasing the charging voltage and increasing the packing density of an electrode plate.

Because the nonaqueous electrolyte secondary batteries manufactured in such manner have characteristics of high charging voltage and packing density, the positive electrode active material is required to have high oxidation resistance. Furthermore, the nonaqueous electrolytic solution is required to have high oxidation resistance as well as the ability of readily permeating into an electrode plate having high density. Both such oxidation resistance of the positive electrode material and such oxidation resistance and high permeability of the nonaqueous electrolytic solution are essential for nonaqueous electrolyte secondary batteries having high capacity and high voltage.

As a method for ensuring the oxidation resistance of positive electrode active material, JP-A-2005-317499 discloses a method to add zirconium (Zr) and magnesium (Mg) to a lithium-cobalt composite oxide and use the resultant product with a lithium-manganese-nickel composite oxide in combination. When such material is used as positive electrode active material, deterioration due to the elution of transition-metal ions from the positive electrode material can be suppressed, and even when the charging voltage is set at a positive electrode potential of more than 4.3 V based on lithium, a nonaqueous electrolyte secondary battery capable of achieving superior cycling characteristics and thermal stability can be obtained.

As described above, the method for ensuring the oxidation resistance of positive electrode active material under a high charging voltage condition is known. However, using such positive electrode material does not suppress the decomposition of a nonaqueous electrolytic solution on the positive electrode active material. Thus, in the nonaqueous electrolyte secondary batteries, superior battery performance cannot be expected under high charging voltage unless a nonaqueous electrolytic solution that has improved oxidation resistance under high charging voltage is used in combination.

For improving the oxidation resistance of the nonaqueous electrolytic solution, using fluoroethylene carbonate

in place of ethylene carbonate is effective. When the fluoroethylene carbonate is used in combination with the positive electrode material above, a nonaqueous electrolyte secondary battery having superior oxidation resistance can be obtained. However, it is difficult to obtain sufficient cycling life by this combination alone.

A widely known method for improving the cycling life characteristics of a nonaqueous electrolyte secondary battery is to add a chain carbonate into a nonaqueous electrolytic solution. The cycling life characteristics of a nonaqueous electrolyte secondary battery improve with higher conductivity and lower viscosity of the nonaqueous electrolytic solution. This is because lithium ions move smoothly in the nonaqueous electrolytic solution and thus the electrolytic solution quickly permeates into the electrode plate. Of the chain carbonates, dimethyl carbonate (hereinafter referred to as "DMC") satisfies such requirements particularly well. Thus, when a right amount of DMC is added into the nonaqueous electrolytic solution, the cycling life greatly improves.

On the other hand, chain carbonates are readily reduced on a negative electrode, and prone to self-discharge when left charged for a long time in a high temperature environment. To address this, in order to suppress the reductive decomposition of an organic solvent, there has been known a method in which a negative electrode surface film (SEI: Solid Electrolyte Interface; hereinafter referred to as "SEI surface film") also referred to as a passivation layer is formed by adding various compounds into a nonaqueous electrolytic solution for preventing direct reaction of the negative electrode active material with the organic solvent.

For example, JP-A-8-45545 and WO 2005/008829 disclose the use of at least one compound selected from among vinylene carbonate (hereinafter referred to as "VC") and derivatives thereof as an additive for a nonaqueous electrolytic solution in a nonaqueous electrolyte secondary battery. As a result, self reductive decomposition occurs on the surface of the negative electrode, thereby forming an SEI surface film on the negative electrode active material before the insertion of lithium into the negative electrode in the first charging, so as to form a barrier for preventing insertion of solvent molecules around lithium ions.

The required amount of VC in this case is considered as the sum of the amount required for initially forming the SEI surface film (about 1%) and the amount required for repairing the film over the long term (about 0.5 to 2%). Generally, the total of the amounts for initial forming and for repairing, depending on the material composition of the particular nonaqueous electrolyte secondary battery, is added.

However, even when VC for repairing is added, the high-temperature charged storage characteristics will not be adequate if the charging potential of the positive electrode in a nonaqueous electrolyte secondary battery is set to 4.4 V based on lithium or higher instead of the ordinary 4.3 V. This is considered to be because, due to the high potential of the positive electrode, the VC for repairing is oxidized on the positive electrode and the VC itself causes the self-discharge.

Due to this phenomenon, it has been very difficult for a nonaqueous electrolyte secondary battery that employs positive electrode active material with ensured oxidation resistance and a nonaqueous electrolytic solution with fluoroethylene carbonate and a chain carbonate combined, and that has a positive electrode charging potential of 4.4 V or higher based on lithium, to have both superior cycling characteristics and high-temperature charged storage characteristics.

## SUMMARY

An advantage of some aspects of the invention is to provide a nonaqueous electrolyte secondary battery that has a positive electrode charging potential of 4.4 V or higher based on lithium, particularly by adding another organic additive in place of VC, and that suppresses self-discharge when stored at high temperature in a charged state while keeping high cycling life characteristics.

According to an aspect of the invention, a nonaqueous electrolyte secondary battery includes a positive electrode containing positive electrode active material, a negative electrode containing negative electrode active material, a nonaqueous electrolyte, and a separator. The positive electrode active material is composed of a mixture of a lithium-cobalt composite oxide containing at least both zirconium and magnesium, and a lithium-manganese-nickel composite oxide containing at least both manganese and nickel. The nonaqueous electrolyte includes fluoroethylene carbonate and dimethyl carbonate as a nonaqueous solvent and further includes an additive expressed by General Formula (1):

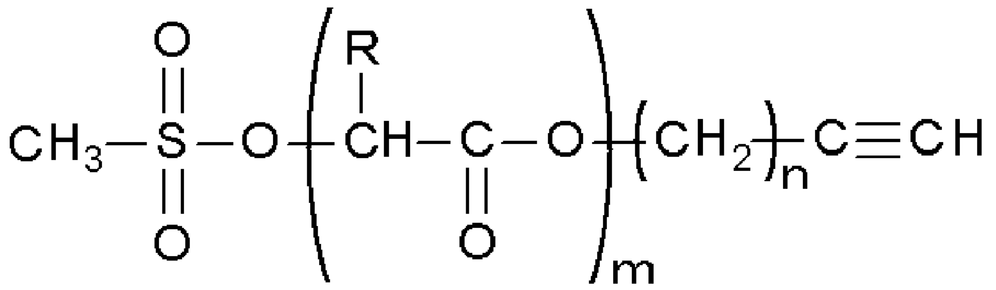

(1)

(where R is a methyl group or a hydrogen atom, m is 0 or 1, and n is 1 or 2). The positive electrode has a charging potential of 4.4 to 4.6 V based on lithium.

The nonaqueous electrolyte secondary battery according to the aspect of the invention employs, as positive electrode active material, the mixture containing a lithium-cobalt composite oxide containing at least both zirconium and magnesium and a lithium-manganese-nickel composite oxide containing at least both manganese and nickel. The positive electrode active material has good oxidation resistance even when the positive electrode has a charging potential of 4.4 V or more and 4.6 V or less based on lithium, and thus a nonaqueous electrolyte secondary battery having a large capacity can be obtained. The lithium-cobalt composite oxide preferably contains another element such as aluminum and titanium.

In the nonaqueous electrolyte secondary battery according to the aspect of the invention, the nonaqueous solvent is required to contain fluoroethylene carbonate and dimethyl carbonate.

Fluoroethylene carbonate is one of the cyclic carbonates, but compared with the common cyclic carbonates it does not readily undergo oxidative and reductive decomposition. The content of fluoroethylene carbonate is preferably 10 to 40% by volume, more preferably 15 to 35% by volume relative to the total volume of the nonaqueous solvent. If the content of fluoroethylene carbonate is low, the oxidation resistance will become inadequate at a high potential. If the content is too high, the permeability of the liquid into the electrode plates will decrease, and hence the cycling characteristics will decline because the solvent viscosity will be high.

Dimethyl carbonate has the lowest viscosity among the chain carbonates, and thus is suitable for reducing the viscosity of the whole solvent. Using dimethyl carbonate improves the permeability of the liquid into the electrode plates, and thus the cycling characteristics improve. The content of dimethyl carbonate is preferably 5 to 50% by volume, more preferably 10 to 40% by volume, still more preferably 15 to 35% by volume relative to the total volume of the nonaqueous solvent. If the content of dimethyl carbonate is low, the solvent viscosity will increase, and thus the cycling characteristics may decrease. If the content is too high, the oxidation resistance of the solvent will lower, and thus the cycling characteristics and storage characteristics may decline

In the nonaqueous electrolyte secondary battery according to the aspect of the invention, the nonaqueous electrolyte includes an additive expressed by General Formula (1).

The compound expressed by General Formula (1) has, like VC, the capability to form an SEI surface film, and furthermore has a higher oxidation resistance than that of VC. Thus, with the nonaqueous electrolyte secondary battery according to the aspect of the invention, the negative electrode active material is unlikely to react with the organic solvent. Therefore, decomposition of the organic solvent is suppressed.

In addition, even if the SEI film is damaged while stored at high temperature in a charged state, the damage will be repaired by the compound expressed by General Formula (1). Thus, the nonaqueous electrolyte secondary battery according to the aspect of the invention provides a nonaqueous electrolyte secondary battery that suppresses self-discharge when stored at high temperature in a charged state while keeping high cycling life characteristics even when the positive electrode has a charging potential of 4.4 V or higher based on lithium. It is not preferable for the positive electrode to have a charging potential of more than 4.6 V based on lithium, because then the positive electrode active material would deteriorate.

Specific examples of the compound expressed by General Formula (1) include 2-propynyl 2-(methanesulfonyloxy)propionate, 3-butynyl 2-(methanesulfonyloxy)propionate, 2-propynyl methanesulfonyloxyacetate, 3-butynyl methanesulfonyloxyacetate, 2-propynyl methanesulfonate, and 3-butynyl methanesulfonate. Preferred is 2-propynyl 2-(methanesulfonyloxy)propionate, 2-propynyl methanesulfonyloxyacetate, or 2-propynyl methanesulfonate. More preferred is 2-propynyl 2-(methanesulfonyloxy)propionate or 2-propynyl methanesulfonate.

Two or more of the compounds expressed by General Formula (1) may be used in combination, and in particular, it is preferable to use 2-propynyl 2-(methanesulfonyloxy)propionate and 2-propynyl methanesulfonate in combination. The content of the additive is preferably 0.2 to 2% by mass relative to the total mass of the nonaqueous electrolyte.

As the electrolyte salt for the nonaqueous electrolyte in the nonaqueous electrolyte secondary battery according

to the aspect of the invention, a salt commonly used as the electrolyte in related art nonaqueous electrolyte secondary batteries may be used. For example, at least one compound selected from among $LiBF_4$, $LiPF_6$, $LiCF_3SO_3$, $LiC_4F_9SO_3$, $LiN(CF_3SO_2)_2$, $LiN(C_2F_5SO_2)_2$, $LiAsF_6$, and lithium difluoro(oxalato)borate may be used. Such electrolyte is preferably used in a concentration of 0.5 to 2 mol/L relative to the nonaqueous solvent.

Examples of the material to be used for the negative electrode of the invention include lithium metal, lithium alloy, carbon material including graphite, silicon material, lithium composite oxide, and the like materials capable of absorbing and desorbing lithium.

In the nonaqueous electrolyte secondary battery according to the aspect of the invention, it is preferable that the nonaqueous electrolyte further include VC as the additive.

VC forms an SEI surface film more readily than the compound expressed by General Formula (1). Thus, when both the compound expressed by General Formula (1) and VC are present in the nonaqueous electrolyte in a nonaqueous electrolyte secondary battery, an SEI surface film will be formed from the VC initially, and even if the SEI film is damaged after the VC has been used up, the damage can be repaired by the compound expressed by General Formula (1).

After the VC is completely used up, self-discharge due to reaction between the VC and the positive electrode active material will not occur during storage at high temperature in a charged state. Moreover, the compound expressed by General Formula (1) will remain unused, and thus the SEI surface film will be repaired over the long term, and self-discharge due to reaction between the nonaqueous electrolyte and negative electrode active material during storage at high temperature in a charged state will be suppressed. Therefore, the cycling life is further improved. The amount of VC added is preferably on the order of the amount sufficient for the initial SEI surface film to be formed (about 1% by mass relative to the total amount of the nonaqueous electrolyte), but a slightly higher amount may be added without problem. Therefore, the amount of VC added is preferably 0.1 to 1.5% by mass and more preferably 0.5 to 1% by mass.

In the nonaqueous electrolyte secondary battery according to the aspect of the invention, it is preferable that the compound expressed by General Formula (1) be a compound expressed by Chemical Structural Formula (2) or (3):

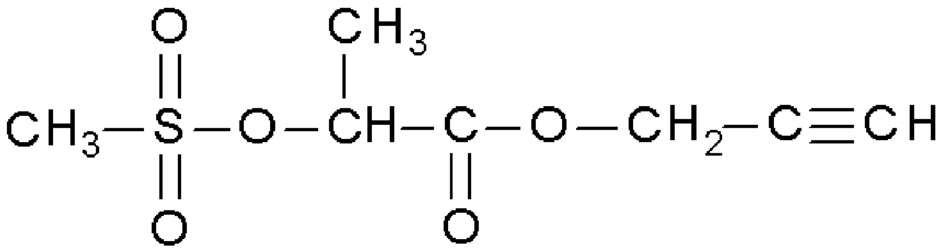

(2)

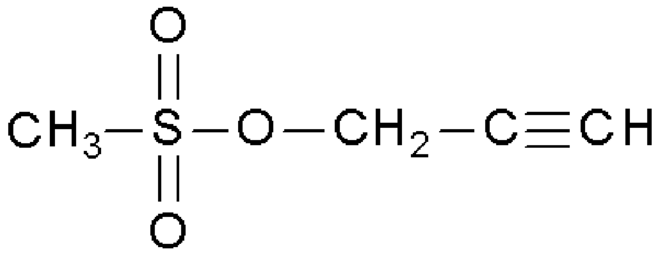

(3)

The compound expressed by Chemical Structural Formula (2) is a compound known as PMP (2-propynyl 2-(methanesulfonyloxy)propionate), and the compound expressed by Chemical Structural Formula (3) is a compound known as MSP (2-propynyl methanesulfonate). When such PMP or MSP is used, the above-described advantages are saliently manifested.

In the nonaqueous electrolyte secondary battery according to the aspect of the invention, the lithium-manganese-nickel composite oxide is a compound expressed by $LiNi_xMnyCo_zO_2$ ($x + y + z = 1$), and the amount of $LiNi_xMn_yCo_zO_2$ ($x + y + z = 1$) mixed in may be 5 to 25 parts by mass, taking the total mass of the positive electrode active material to be 100 parts by mass.

When the lithium-manganese-nickel composite oxide in the positive electrode active material is a compound expressed by $LiNi_xMnyCo_zO_2$ ($x + y + z = 1$) and the amount of $LiNi_xMn_yCo_zO_2$ ($x + y + z = 1$) mixed in is 5 to 25 parts by mass with the total mass of the positive electrode active material being 100 parts by mass, the above-described advantages are particularly well manifested. If the amount mixed in is less than 5 parts by mass, the positive electrode

active material will have insufficient thermal stability at a high potential, and if it is more than 25 parts by mass, the battery capacity and cycling characteristics will become inadequate, so that the advantages of the invention will not be fully obtained.

In the nonaqueous electrolyte secondary battery according to the aspect of the invention, it is preferable that the nonaqueous solvent contain an asymmetric chain carbonate as a chain carbonate, and particularly contain methyl ethyl carbonate.

Methyl ethyl carbonate has higher oxidation resistance than dimethyl carbonate has. It is therefore preferable to use the both together. The content of methyl ethyl carbonate in the nonaqueous solvent is preferably 10 to 70% by volume, more preferably 20 to 50% by volume.

DESCRIPTION OF EXEMPLARY EMBODIMENTS

Exemplary embodiments of the invention will now be described in detail with reference to examples and comparative examples. However, the examples described below are merely illustrative examples of nonaqueous electrolyte secondary batteries that embody the technical spirit of the invention, and are not intended to limit the invention to these particular nonaqueous electrolyte secondary batteries. The invention can be equally applied to various modified cases without departing from the technical spirit described in the claims.

First, a specific method for producing a nonaqueous electrolyte secondary battery common to various examples and comparative examples will be described.

Preparation of Positive Electrode Plate

The positive electrode active material used in the Examples 1 to 4 and the Comparative Examples 1 to 3 was a mixture of layered lithium nickel manganese cobalt composite oxide ($LiNi_{1/3}Mn_{1/3}CO_{1/3}O_2$) and lithium cobalt oxide containing magnesium, aluminum, and zirconium ($LiCo_{0.973}Mg_{0.005}Al_{0.02}Zr_{0.002}O_2$), in the ratio of 1 : 9 by mass (hereinafter referred to as the "hybrid positive electrode active material"). The hybrid positive electrode active material was mixed with carbon black (for example, "Ketjenblack" (trade name)) as a conductive auxiliary agent and fluorine resin as a binding agent, in the ratio of 94 : 3 : 3 by mass, and the mixture was dissolved in N-methyl-2-pyrrolidone (NMP) to make a paste.

The paste was evenly applied on both sides of an aluminum foil having a thickness of 15 μm by the doctor blade method. Next, the coated foil was treated with heat under vacuum at temperature ranging from 100 to 150°C in a heated dryer to remove the NMP, and then pressed with a roll press so as to have a thickness of 0.13 mm, to prepare a positive electrode plate.

The positive electrode material for the Comparative Examples 4 to 7 was prepared in a similar manner to that described above except that $LiCoO_2$ was used alone for the Comparative Examples 4 and 6 and that a lithium cobalt oxide containing magnesium, aluminum, and zirconium ($LiCo_{0.973}Mg_{0.005}Al_{0.02}Zr_{0.002}O_2$) was used alone for the Comparative Examples 5 and 7.

Preparation of Negative Electrode Plate

The negative electrode plate common to the Examples 1 to 4 and the Comparative Examples 1 to 7 was prepared as follows. First, a mixture of negative electrode active material composed of graphite, styrene-butadiene rubber (SBR) as a binding agent, and carboxymethylcellulose (CMC) as a viscosity modifier, in the ratio of 96 : 2 : 2 by mass, was dissolved in water to make a paste. The paste was evenly applied on both sides of a copper foil having a thickness of 10 μm by the doctor blade method. Then, the coated foil was treated with heat at temperature ranging from 100 to 150°C in a heated dryer to remove water, and then pressed with a roll press so as to have a thickness of 0.12 mm, to prepare a negative electrode plate. In preparing the negative electrode plate, the amount of the active material applied on the negative electrode plate was appropriately varied so that the negative electrode initial charging capacity was 100% or more per unit area with respect to the initial charging capacity per unit area of the opposed positive electrode plate.

Preparation of Nonaqueous Electrolytic Solution

The nonaqueous electrolytic solution was prepared by appropriately mixing fluoroethylene carbonate (FEC), methyl ethyl carbonate (MEC), and dimethyl carbonate (DMC) and, as necessary, appropriately adding VC, PMP, and MSP. The specific composition ratios are listed in Table 1 and Table 2. In each case, $LiPF_6$ was added as the electrolyte salt, in a concentration of 1.0 mol/L.

Preparation of Nonaqueous Electrolyte Secondary Battery

Using the positive electrode plate, negative electrode plate, and nonaqueous electrolytic solution prepared as described above, a cylindrical nonaqueous electrolyte secondary battery (with capacity 2700 mAh, height 65 mm, and diameter 18 mm) was prepared for each of the Examples 1 to 4 and the Comparative Examples 1 to 7. A polypropylene microporous membrane was used as a separator.

High-Temperature Charged Storage Characteristics

High-temperature charged storage characteristics were determined as follows. Each battery was charged at 25°C at a constant current of 1 It = 2700 mA. After the battery voltage reached 4.3 V (the positive electrode potential was 4.4 V based on lithium), the battery was charged at a constant voltage of 4.3 V until the charging current reached (1/50) It = 54 mA to achieve a fully charged state. Then the battery was discharged at a constant current of 1 It = 2700 mA until the battery voltage reached 3.0 V. The charge amount during this discharging was measured and taken as the capacity before storage.

After that, the battery was charged at a constant current of 1 It = 2700 mA. When the battery voltage reached 4.3 V (the positive electrode potential was 4.4 V based on lithium), the battery was charged at a constant voltage of 4.3 V until the charging current reached (1/50) It = 54 mA to achieve a fully charged state, and then stored in a thermostatic chamber kept at 60°C for 20 days. After that, each battery was cooled to 25°C, and discharged at 25°C at a constant current of 1 It = 2700 mA until the battery voltage reached 3.0 V. The charge amount during this discharging was measured and taken as the capacity after storage. The residual capacity (%) was determined using the calculation formula below and taken as the high-temperature charged storage characteristics. The results are listed in Table 1 and Table 2.

$$\text{Residual capacity (\%)} = (\text{Capacity after storage} / \text{Capacity before storage}) \times 100$$

Cycling Characteristics

The cycling characteristics were evaluated as follows. Each battery was charged at 25°C at a constant current of 1 It = 2700 mA. After the battery voltage reached 4.3 V (the positive electrode potential was 4.4 V based on lithium), the battery was charged at a constant voltage of 4.3 V until the charging current reached (1/50) It = 54 mA to achieve a fully charged state. Then, the battery was discharged at a constant current of 1 It = 2700 mA until the battery voltage reached 3.0 V, and the discharging capacity was measured. Such cycle for measuring the discharging capacity was repeated 300 times for evaluation. The capacity retention ratio (%) was determined using the calculation formula below and taken as the cycling characteristics. The results are listed in Table 1 and Table 2.

$$\text{Capacity retention ratio (\%)} = (\text{Capacity at 300th cycle} / \text{Capacity at 1st cycle})$$

[Table 1]

| | Positive electrode active material | Nonaqueous solvent (% by volume) | | | Additive (% by mass) | | Cycling life capacity retention ratio (%) | | Residual capacity (%) after high-temperature storage | |
|---|---|---|---|---|---|---|---|---|---|---|
| | | FEC | MEC | DMC | PMP | VC | | | | |
| Comparative Example 1 | Hybrid positive electrode active material | 30 | 70 | 0 | 0 | 1 | 56 | Δ | 84 | O |
| Comparative Example 2 | Hybrid positive electrode active material | 30 | 35 | 35 | 0 | 1 | 82 | O | 68 | Δ |
| Comparative Example 3 | Hybrid positive electrode active material | 30 | 35 | 35 | 0 | 2 | 83 | O | 72 | Δ |
| Comparative Example 4 | $LiCoO_2$ | 30 | 35 | 35 | 1 | 1 | 84 | O | 62 | Δ |
| Comparative Example 5 | $LiCo_{0973}Mg_{0005}Al_{002}Zr_{0002}O_2$ | 30 | 35 | 35 | 1 | 1 | 86 | O | 67 | Δ |
| Example 1 | Hybrid positive electrode active material | 30 | 35 | 35 | 1 | 1 | 85 | O | 86 | O |
| Example 2 | Hybrid positive electrode active material | 30 | 35 | 35 | 2 | 0 | 83 | O | 85 | O |

PMP = 2-propynyl 2-(methanesulfonyloxy)propionate

From the results shown in Table 1, the following will be seen. In the battery of the Comparative Example 1, the oxidation resistance of the positive electrode was ensured by the combination of the hybrid positive electrode and FEC, but adequate cycling characteristics were not obtained. The reason for this is considered to be as follows. In the battery of the Comparative Example 1, the nonaqueous solvent had high viscosity because no DMS was added, and the nonaqueous electrolytic solution permeated the electrode plates slowly, lowering the cycling characteristics.

In the batteries of the Comparative Examples 2 and 3, DMC was added into the nonaqueous solvent of the Comparative Example 1. As a result, the cycling characteristics improved, while the high-temperature charged storage characteristics declined. The reason for this is considered to be that the addition of DMC to the nonaqueous solvent lowered the viscosity of the nonaqueous solvent, so that the cycling characteristics improved. However, in the batteries of the Comparative Examples 1 and 2, in which the amount of VC added was 1% by mass, almost all of the VC was used up for forming the SEI surface film at the initial state because the amount of VC added was low, so that it can be assumed that almost no VC remained for repairing during storage at high temperature in a charged state. However, the battery of the Comparative Example 2, in which DMC was added to the nonaqueous solvent, had even lower high-temperature charged storage characteristics than the battery of the Comparative Example 1, in which no DMC was added to the nonaqueous solvent. The reason for this is considered to be that a side reaction occurring between the DMC and the negative electrode in the battery of the Comparative Example 2 lowered the high-temperature charged storage characteristics.

In the battery of the Comparative Example 3, in which the amount of VC added was 2% by mass, the high-temperature charged storage characteristics were better than in the battery of the Comparative Example 2, in which only a little VC was added, but were poorer than that of the battery of the Comparative Example 1, in which no DMC was added. The reason for this is considered to be as follows. Since the amount of VC added was high in the battery of the Comparative Example 3, VC remained during storage at high temperature in a charged state, but used for repairing the SEI surface film, this VC engaged in a side reaction with the positive electrode active material on the positive electrode surface, so that the high-temperature charged storage characteristics declined.

In the Comparative Examples 4 and 5, DMC, VC, and PMP in the same amount as in the Example 1 were added to the nonaqueous solvent, but the $LiCoO_2$ (Comparative Example 4) and $LiCo_{0.973}Mg_{0.005}Al_{0.02}Zr_{0.002}O_2$ (Comparative Example 5) used as the positive electrode active material had poorer oxidation resistance than that of the hybrid positive electrode active material, and therefore, it is considered, the high-temperature charged storage characteristics declined.

By contrast, in the battery of the Example 1, VC (1% by mass) for forming an SEI surface film at the initial state and PMP (1% by mass) for repairing the SEI surface film over the long term were added to the nonaqueous solvent, with the result that both the cycling characteristics and the high-temperature charged storage characteristics improved. When the test results of the Example 1 is compared with the test results of the Comparative Example 2, it is will be seen that in the battery of the Example 1, the SEI surface film was repaired as a result of the addition of PMP into the nonaqueous solvent. Furthermore, when the test results of the Example 1 are compared with the test results of the Comparative Example 3, it will be seen that the PMP has a superior repairing effect on the SEI surface film over that of VC in a charged storage environment at high voltage and high temperature.

In the battery of the Example 2, PMP was used alone without VC as the additive for forming an SEI surface film. Substantially the same effect was obtained as in the battery of the Example 1. This result demonstrates that PMP has not only much the same effect of repairing the SEI surface film over the long term but also much the same effect of forming the SEI surface film at the initial state, as VC has.

[Table 2]

| | Positive electrode active material | Nonaqueous solvent (% by volume) | | | Additive (% by mass) | | Cycling life capacity retention ratio (%) | | Residual capacity (%) after high-temperature storage | |
|---|---|---|---|---|---|---|---|---|---|---|
| | | FEC | MEC | DMC | MSP | VC | | | | |
| Comparative Example 6 | $LiCoO_2$ | 30 | 35 | 35 | 1 | 1 | 82 | O | 64 | Δ |
| Comparative Example 7 | $LiCo_{0973}Mg_{0005}Al_{002}Zro_{002}O_2$ | 30 | 35 | 35 | 1 | 1 | 85 | O | 64 | Δ |
| Example 3 | Hybrid positive electrode active material | 30 | 35 | 35 | 1 | 1 | 85 | O | 86 | O |
| Example 4 | Hybrid positive electrode active material | 30 | 35 | 35 | 2 | 0 | 84 | O | 85 | O |

MSP: 2-propynyl methanesulfonate

From the results shown in Table 2, the following will be seen. In the Examples 3 and 4, MSP was added in place of the PMP in the Examples 1 and 2. As a result, as with the Examples 1 and 2, the storage characteristics improved in each case, and both the cycling characteristics and the high-temperature storage characteristics were achieved. MSP and PMP have comparable effects of forming and repairing the protective film. This suggests that a compound sharing the structure of MSP and PMP will have similar cycling characteristics improving effects and high-temperature charged storage characteristics improving effects in a nonaqueous electrolyte secondary battery for high charging voltage.

In the Comparative Examples 6 and 7, MSP was added, but the positive electrode active material was not the hybrid positive electrode active material as in the batteries of the Comparative Examples 4 and 5. It will be seen that the high-temperature charged storage characteristics were inadequate regardless of the presence or absence of the dissimilar elements Mg, Al, and Zr in the positive electrode active material. This would seem to be because these positive electrode active materials have poorer oxidation resistance than that of the hybrid positive electrode.

Thus, from comparisons of the battery of the Example 1 with the batteries of the Comparative Examples 4 and 5, and of the battery of the Example 3 with the batteries of the Comparative Examples 6 and 7, it can be seen that the addition of MSP or PMP is advantageous when the hybrid positive electrode active material is used as positive electrode active material and the positive electrode has a charging potential of 4.4 to 4.6 V based on lithium.

## Claims

1. A nonaqueous electrolyte secondary battery comprising:

   a positive electrode containing positive electrode active material;
   a negative electrode containing negative electrode active material;
   a nonaqueous electrolyte; and
   a separator;
   the positive electrode active material being composed of a mixture of a lithium-cobalt composite oxide containing at least both zirconium and magnesium, and a lithium-manganese-nickel composite oxide containing at least both manganese and nickel,
   the nonaqueous electrolyte including fluoroethylene carbonate and dimethyl carbonate as a nonaqueous solvent and further including an additive expressed by General Formula (1):

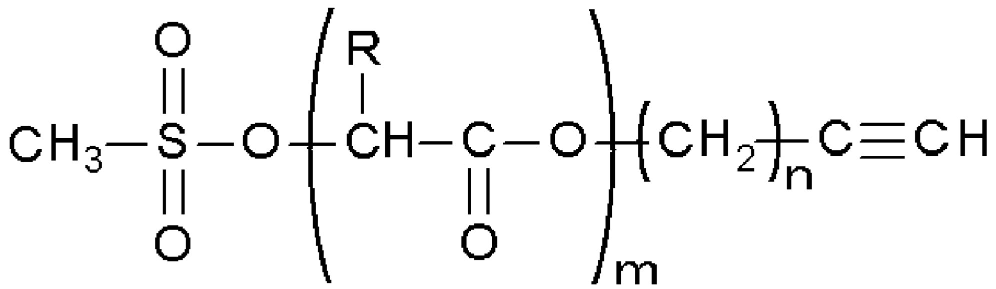

(1)

   (where R is a methyl group or a hydrogen atom, m is 0 or 1, and n is 1 or 2), and
   the positive electrode having a charging potential of 4.4 to 4.6 V based on lithium.

2. The nonaqueous electrolyte secondary battery according to claim 1, wherein the nonaqueous electrolyte further includes vinylene carbonate as the additive.

3. The nonaqueous electrolyte secondary battery according to claim 1, wherein the compound expressed by General Formula (1) is a compound expressed by Chemical Structural Formula (2) or (3):

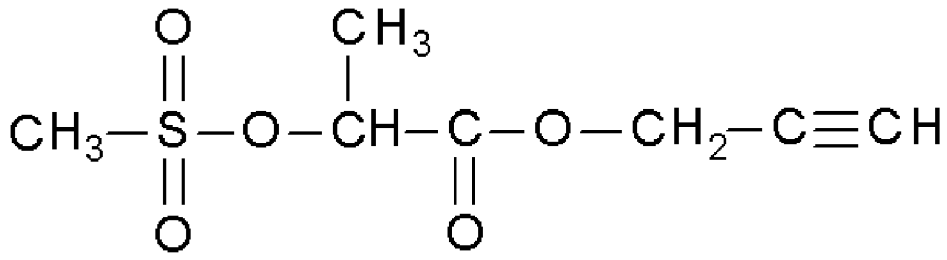

(2)

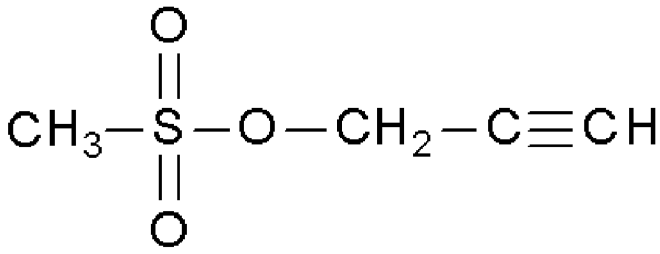

(3)

4. The nonaqueous electrolyte secondary battery according to claim 1, wherein
the lithium-manganese-nickel composite oxide is a compound expressed by $LiNi_xMn_yCo_zO_2$ (x + y + z = 1), and the amount of $LiNi_xMn_yCo_zO_2$ (x + y + z = 1) mixed in is 5 to 25 parts by mass with the total mass of the positive electrode active material being 100 parts by mass.

5. The nonaqueous electrolyte secondary battery according to any one of claims 1 to 4, wherein the nonaqueous solvent contains methyl ethyl carbonate as a chain carbonate.

Europäisches Patentamt
European Patent Office
Office européen des brevets

# EUROPEAN SEARCH REPORT

Application Number
EP 11 15 6591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/130566 A1 (SANYO ELECTRIC CO., LTD.; UBE INDUSTRIES, LTD.)<br>21 May 2009 (2009-05-21)<br>* paragraph [0025] - paragraph [0029] *<br>* paragraph [0032] *<br>* paragraph [0040] *<br>* paragraph [0045] *<br>* paragraph [0064] - paragraph [0070] *<br>* examples 1-8; table 1 *<br>* claims 1,3,8,9,13,14 *<br>----- | 1-5 | INV.<br>H01M10/0567<br>H01M10/0569<br>H01M10/052<br>H01M4/505<br>H01M4/525<br><br>ADD.<br>H01M4/36 |
| Y | US 2009/053598 A1 (UBE INDUSTRIES, LTD.)<br>26 February 2009 (2009-02-26)<br>* paragraph [0022] - paragraph [0023] *<br>* paragraph [0028] - paragraph [0040] *<br>* paragraph [0043] - paragraph [0045] *<br>* paragraph [0088] - paragraph [0090] *<br>* paragraph [0093] - paragraph [0095] *<br>* paragraph [0113] - paragraph [0115] *<br>* example 2; table 1 *<br>* example 29; table 5 *<br>* claims 1-3,5 *<br>----- | 1-5 | TECHNICAL FIELDS SEARCHED (IPC)<br>H01M |
| A | WO 2009/113545 A1 (UBE INDUSTRIES, LTD.)<br>17 September 2009 (2009-09-17)<br>* abstract * | 1-5 | |
| A,P | & EP 2 251 926 A1 (UBE INDUSTRIES, LTD.)<br>17 November 2010 (2010-11-17)<br>* paragraph [0008] - paragraph [0011] *<br>* paragraph [0019] - paragraph [0024] *<br>* paragraph [0028] - paragraph [0029] *<br>* example 8; table 1 *<br>* claims 1,2 *<br>-----<br>-/-- | 1-5 | |

The present search report has been drawn up for all claims

| Place of search | Date of completion of the search | Examiner |
|---|---|---|
| Munich | 10 May 2011 | Masson, Jean-Pierre |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 11 15 6591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 1 650 826 A1 (UBE INDUSTRIES, LTD.) 26 April 2006 (2006-04-26)<br>* paragraph [0013] - paragraph [0014] *<br>* paragraph [0015] - paragraph [0017] *<br>* paragraph [0020] *<br>* paragraph [0027] - paragraph [0029] *<br>* examples 7, 15 *<br>* claims 1, 6, 7, 10-13 *<br>----- | 1-5 | |
| A | US 6 479 191 B1 (UBE INDUSTRIES, LTD.) 12 November 2002 (2002-11-12)<br>* column 2, line 1 - column 3, line 3 *<br>* column 4, lines 41-57 *<br>* column 6, lines 10-31 *<br>* column 6, line 58 - column 7, line 3 *<br>* examples I.3, I.9; table I.1 *<br>* claims 1,3,4, 9, 13, 15, 16, 21 *<br>----- | 1-5 | |
| A,D | EP 1 734 601 A1 (SANYO ELECTRIC CO., LTD.) 20 December 2006 (2006-12-20)<br>* paragraph [0011] - paragraph [0013] *<br>* paragraph [0016] - paragraph [0019] *<br>* examples 1-4; table 2 *<br>* examples 5, 6; table 3 *<br>* claims 1, 2, 5 *<br>----- | 1-5 | TECHNICAL FIELDS SEARCHED (IPC) |

The present search report has been drawn up for all claims

| Place of search | Date of completion of the search | Examiner |
|---|---|---|
| Munich | 10 May 2011 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

3

EPO FORM 1503 03.82 (P04C01)

## ANNEX TO THE EUROPEAN SEARCH REPORT ON EUROPEAN PATENT APPLICATION NO. EP 11 15 6591

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2011

| Patent document cited in search report | Publication date | Patent family member(s) | Publication date |
|---|---|---|---|
| US 2009130566 A1 | 21-05-2009 | CN 101453041 A | 10-06-2009 |
| | | JP 2009140919 A | 25-06-2009 |
| | | KR 20090050951 A | 20-05-2009 |
| US 2009053598 A1 | 26-02-2009 | WO 2006077763 A1 | 27-07-2006 |
| | | JP 4479728 B2 | 09-06-2010 |
| | | JP 2010118356 A | 27-05-2010 |
| | | KR 20070097072 A | 02-10-2007 |
| | | US 2010239919 A1 | 23-09-2010 |
| WO 2009113545 A1 | 17-09-2009 | CN 101971409 A | 09-02-2011 |
| | | EP 2251926 A1 | 17-11-2010 |
| | | KR 20110008162 A | 26-01-2011 |
| | | US 2011064998 A1 | 17-03-2011 |
| EP 1650826 A1 | 26-04-2006 | CA 2532579 A1 | 27-01-2005 |
| | | WO 2005008829 A1 | 27-01-2005 |
| | | JP 4582458 B2 | 17-11-2010 |
| | | JP 2010182688 A | 19-08-2010 |
| | | KR 20060035767 A | 26-04-2006 |
| | | US 2006177742 A1 | 10-08-2006 |
| US 6479191 B1 | 12-11-2002 | CN 1322027 A | 14-11-2001 |
| | | HK 1041562 A1 | 10-06-2005 |
| | | JP 2001313072 A | 09-11-2001 |
| EP 1734601 A1 | 20-12-2006 | JP 2005317499 A | 10-11-2005 |
| | | WO 2005093880 A1 | 06-10-2005 |
| | | KR 20060132968 A | 22-12-2006 |
| | | US 2010112450 A1 | 06-05-2010 |
| | | US 2007196736 A1 | 23-08-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005317499 A
- JP 8045545 A
- WO 2005008829 A